(19) Europäisches Patentamt
European Patent Office
Office européen des brevets

(11) **EP 1 796 034 A1**

(12) **EUROPEAN PATENT APPLICATION**
published in accordance with Art. 158(3) EPC

(43) Date of publication:
**13.06.2007 Bulletin 2007/24**

(51) Int Cl.:
***G06T 1/00*** *(2006.01)*   ***G06F 19/00*** *(2006.01)*

(21) Application number: **05774554.9**

(22) Date of filing: **24.08.2005**

(86) International application number:
**PCT/JP2005/015372**

(87) International publication number:
**WO 2006/025243 (09.03.2006 Gazette 2006/10)**

(84) Designated Contracting States:
**DE GB NL**

(30) Priority: **31.08.2004 JP 2004253531**

(71) Applicant: **Japan Science and Technology Agency**
**Kawaguchi-shi,**
**Saitama 332-0012 (JP)**

(72) Inventors:
• **MORITA, Hiroshi,**
**2-6-15-203, Sakashita-cho**
**Saytama 334-0003 (JP)**

• **DOI, Masao**
**Bunkyo-ku, Tokyo 113-0023 (JP)**
• **YAMAUE, Tatsuya**
**Chiba-shi, Chiba 262-0024 (JP)**

(74) Representative: **Müller - Hoffmann & Partner**
**Patentanwälte,**
**Innere Wiener Strasse 17**
**81667 München (DE)**

(54) **VIRTUAL EXPERIMENTAL INTERFACE FOR INTERLOCKING WITH EXPERIMENTAL DEVICE**

(57)     The subject invention provides a virtual experiment interface (200) comprising a data acquiring section (201) for acquiring image data of a structure of polymeric material obtained by an experiment measurement apparatus(101); a data conversion section (202) for converting the image data acquired by the data acquiring section (101) into a format compatible with a simulation apparatus(102); a data output section (203) for outputting data converted by the data conversion section (202) to a simulation apparatus. The virtual experiment interface (200) enables an experiment measurement apparatus and a virtual experiment apparatus such as a simulation to operate in conjunction with each other, thereby carrying out simulation that reflects a real system to a further extent. Further, it also makes it possible to carry out a minute analysis which is not possible in a real experiment apparatus.

FIG. 1

**EP 1 796 034 A1**

**Description**

TECHNICAL FIELD

The present invention relates to a virtual experiment system using a virtual experiment interface which interlocks an experiment measurement apparatus with a virtual experiment apparatus (simulation apparatus). The present invention also relates to a virtual experiment system using the virtual experiment interface.

BACKGROUND ART

In recent years, a simulation apparatus, which analyzes features of molecule aggregation structure such as a polymeric material using a virtual experiment technology (simulation technology), has become common. With the development of this simulation apparatus, the structural features or the like of a substance can be analyzed by way of computational science without actually carrying out a practical experiment. Therefore the simulation apparatus provides a result which cannot be obtained by the real experiment.

For example, Patent Document 1 discloses a method and a device for analyzing the structure of molecule or molecule aggregation, comprising an atom selecting step for selecting at least three atoms from an atomic coordinate data of molecule or molecule aggregation; a plane determining step for determining a plane of the atoms selected in the atom selecting step; a group determining step for determining a group constituted of at least two planes selected from those determined in the plane determining step; and a digitalization step for digitalizing the geometric relationship between the planes constituting the group determined in the group determining step. There is a report showing certain effectiveness of this analysis method and the apparatus in clarifying the feature of a micro structure of a molecular system having a highly random and a complicated structure, such as a low-molecular aggregation structure or a high-molecular amorphous structure.

Also, Patent Document 2 discloses a pattern predicting method and apparatus for predicting a pattern of a polymeric material, comprising the steps of setting input values of preparation composition of monomer for producing a polymer and polymer manufacturing condition; predicting a primary structure of molecule obtained through a real synthesis using the Monte Carlo method; creating a coarse graining model and determining a coarse graining parameter used for coarse graining molecular dynamics simulation; carrying out a coarse graining molecular dynamics simulation; predicting the pattern and dynamical property of a material incorporating a micro phase separation structure; calculating a dynamical property such as stress-strain curve and some other properties; and calculating alignment coefficient and other pattern factors. It is reported that this pattern predicting method and apparatus is capable of prediction of property of a polymeric material obtained by a practical synthesis, based on the composition and the manufacturing condition of the type of monomer constituting the polymer made of a multiblock copolymer.

In the meantime, various experiment measurement apparatuses (experiment apparatuses) have been developed, aimed at analyzing the structure etc. of a substance through a practical experiment. Particularly, a large number of microscopes are developed to analyze a micro structure of material. One of the examples may be an electron microscope capable of nanoscale analysis of substance. Two types of such an electron microscope have been developed: a scanning electron microscope (SEM) for observing a three-dimensional pattern of a surface of a substance by using the secondary electrons flicked from the surface of the substance in response to irradiation of the surface with an electron beam; and a transmission electron microscope (TEM) which allows the user to "see through" the internal structure of a substance by forming an image with electrons passed through the substance.

Further, recent developments of a three-dimensional transmission electron microscopes (3DTEM), a three-dimensional x-ray microscopes, a confocal laser scanning microscope etc. has made possible not only two-dimensional analysis but also three-dimensional analysis.

[Patent Document 1]
Japanese Laid-Open Patent Publication Tokukaihei 09-223166 (Published on August 26, 1997)
[Patent Document 2]
Japanese Laid-Open Patent Publication Tokukai 2003-105090 (Published on April 9, 2003)

The virtual experiment apparatus, such as a simulation apparatus, for carrying out virtual experiments, and an experiment measurement apparatus, such as a microscope, for carrying out real experiment have been developed completely separately. More specifically, the simulation apparatus has been developed to realize analysis which cannot be achieved by a real experiment by way of virtual experiment with advantage of computational science. On the other hand, the experiment measurement apparatus has been developed to visualize micro structures etc. of a substance, enabling precise observation in a practical experiment. Therefore, the two research fields and technical fields were hardly merged with each other.

Moreover, the virtual experiment apparatus having been developed such as a simulation apparatus requires setting/input of a large amount of data or conditions in advance, which is a significant burden of the researchers who are used to operate the real experiment measurement apparatus. Further, the simulation results given by the virtual experiment apparatus often vary depending on the used conditions etc. Therefore, there have been some reports from apart of the researchers which allege that the results provided by the simulation apparatus do not correspond to the real system, and not fully reliable.

But then a virtual experiment apparatus such as a simulation apparatus is certainly capable of analysis which cannot be achieved by a real experiment measurement apparatus, which is definitely a strong point.

DISCLOSURE OF INVENTION

In view of the foregoing problems, the inventors of the present invention devised a concept of interlocking a virtual experiment apparatus superior in analysis with a real experiment measurement apparatus. The inventors assume that such a structure should realize a virtual experiment with an experiment structure provided by a real experiment measurement apparatus, with which the analysis can be carried out with more minute details and improved accuracy. Based on this assumption, the inventors present totally new objective, development of a virtual experiment interface capable of interlocking an experiment measurement apparatus with a virtual experiment apparatus such as a simulation apparatus.

The present invention was made in view of the foregoing problems and an object is to provide a virtual experiment interface which enables an experiment measurement apparatus and a virtual experiment apparatus such as a simulation apparatus to operate in conjunction with each other. The present invention also provides the usage of the virtual experiment interface.

The inventors of the present invention attempted intensive study to solve the foregoing problems, and eventually created a virtual experiment interface capable of converting/processing experimental structure data, which allows a simulation apparatus to carry out simulation based on an experiment structure (image data) obtained by a three-dimensional transmission electron microscope. By thus carrying out simulation with the data converted/processed by the virtual experiment interface, it becomes possible to carry out more minute analysis (such as information regarding distribution condition of a single polymer). With confirmation of this certain effect, the inventors completed the present invention. The present invention is thus made in view of the totally new knowledge. The present invention incorporates the following inventions (1) to (14).

(1) A virtual experiment interface comprising: data acquiring means for acquiring image data of a structure of a polymeric material; data conversion means for converting the image data acquired by said data acquiring means into a format compatible with a virtual experiment apparatus, which performs structure analysis of the polymeric material; and data output means for outputting data converted into the format by said data conversion means to said virtual experiment apparatus. Note that, the data conversion means is preferably capable of converting the data into a format compatible with a virtual experiment apparatus which carries out structure of polymeric material analysis simulation based on density.

(2) The virtual experiment interface as set forth in (1), wherein the image data is provided by an experiment measurement apparatus.

(3) The virtual experiment interface as set forth in claim (1) or (2), wherein said data conversion means carries out operation for converting said image data into a volume fraction value.

(4) The virtual experiment interface as set forth in (3), wherein the image data is two-dimensional image data, and said data conversion means includes: image reading means for reading a pixel value for each pixel of said image data; numerical conversion means for converting the pixel value read by said image reading means into a volume fraction value; and format conversion means for converting the volume fraction value given by said numerical conversion means into a format compatible with said virtual experiment apparatus.

(5) The virtual experiment interface as set forth in (4) wherein said data conversion means further including region specification means for specifying a region subjected to image processing among the two-dimensional image data acquired by said data acquiring means, and said image reading means reads a pixel value for each pixel in the region specified by the region specification means.

(6) A virtual experiment interface as set forth in (3), wherein said image data is three-dimensional image data constituted of plural two-dimensional image data items, and said data conversion means includes: image reading means for reading a pixel value for each pixel of said image data; numerical conversion means for converting the pixel value read by said image reading means into a volume fraction value; format conversion means for converting the volume fraction value given by said numerical conversion means into a format compatible with said virtual experiment apparatus; and three-dimensional operation means for rearranging the plural two-dimensional data items processed by said format conversion means to create three-dimensional data.

(7) The virtual experiment interface as set forth in (6), wherein the three dimensional image data is constituted of plural two-dimensional image data layers, and said three-dimensional operation means superimposes the plural two-dimensional data items onto each other to constitute the three-dimensional data.

(8) The virtual experiment interface as set forth in (6) or (7), wherein: said data conversion means further including region specification means for specifying a region subjected to image processing among the two-dimensional image data acquired by said data acquiring means, and said image reading means reads a pixel value for each pixel in the region specified by the region specification means.

(9) The virtual experiment interface as set forth in any one of (4) through (8), wherein the numerical conversion means carries out operation for associating an upper limit value and a lower limit value of an image pixel with an upper limit value and a lower limit value of the volume fraction value set by said virtual experiment apparatus.

(10) The virtual experiment interface as set forth in any one of (2) to (9) wherein said experiment measurement apparatus is a microscope.

(11) The virtual experiment interface as set forth in any one of claims (6) to (9) wherein said experiment measurement apparatus is a three-dimensional transmission electron microscope or a confocal laser scanning microscope.

(12) The virtual experiment interface as set forth in any one of (1) to (11) wherein the polymeric material is formed of a multiblock copolymer.

(13) The virtual experiment interface as set forth in (12) wherein said multiblock copolymer forms a network-type micro phase separation.

(14) A virtual experiment system comprising: the virtual experiment interface as set forth in any one of (1) through (13); an experiment measurement apparatus for acquiring image data of a structure of a polymeric material; and a virtual experiment apparatus for performing structure analysis of a polymeric material.

Note that, the virtual experiment interface may be realized by a computer. In this case, the present invention includes a control program of the virtual experiment interface, which causes a computer to function as the respective means of the virtual experiment interface, and a computer-readable storage medium storing the program.

The virtual experiment interface of the present invention interlock an experiment measurement apparatus and a virtual experiment apparatus. Therefore, it becomes possible to carry out a virtual experiment by a virtual experiment apparatus based on an experiment structure obtained by an experiment measurement apparatus. With this advantage the present invention provides an effect that it enables more accurate and minute analysis than a general experiment measurement apparatus. For example, it becomes possible to carry out minute analysis of material property based on an experiment structure obtained by a microscope.

Additional objects, features, and strengths of the present invention will be made clear by the description below. Further, the advantages of the present invention will be evident from the following explanation in reference to the drawings.

BRIEF DESCRIPTION OF DRAWINGS

[Figure 1]
A block diagram showing a structure of a main part of virtual experiment system according to one embodiment of the present invention.
[Figure 2]
A drawing schematically showing a hardware structure of an information processing apparatus compatible with the virtual experiment interface according to one embodiment of the present invention.
[Figure 3]
A drawing schematically showing a functional structure of virtual experiment interface according to one embodiment of the present invention.
[Figure 4]
A drawing showing a sequence of operation performed by a virtual experiment interface according to the present invention.
[Figure 5]
A drawing schematically showing a hardware structure of a virtual experiment system according to one embodiment of the present invention.
[Figure 6]
A block diagram schematically showing a functional structure of a virtual experiment interface according to another embodiment of the present invention.
[Figure 7]
A drawing showing a sequence of operation performed by a virtual experiment interface according to another embodiment of the present invention.

[Figure 8]

A drawing showing plural two-dimensional image data items constituting a three-dimensional image of 3DTEM of a polymeric material formed of PS and PI, according to the Example of the present invention.

[Figure 9]

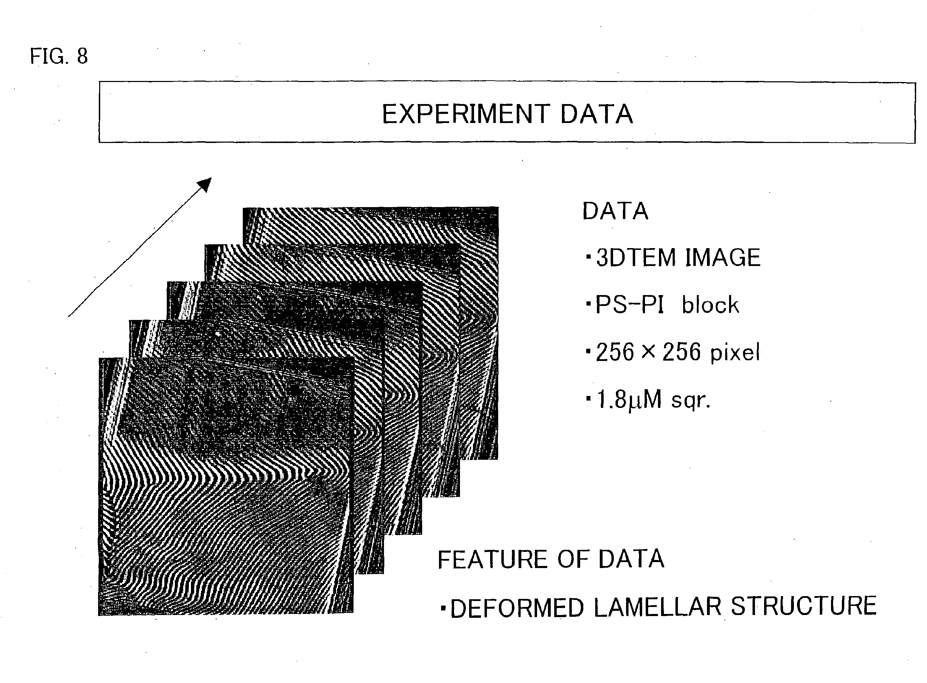

A drawing showing a process image for converting experiment data of Figure 8 into a format compatible with a simulation apparatus.

[Figure 10]

A drawing showing an experiment structure of a 3DTEM image, shown in a screen of a simulation apparatus "OCTA", according to the Example of the present invention.

[Figure 11]

A drawing showing a simulation result by a mean-field engine, according to the Example of the present invention.

[Figure 12]

A drawing showing another simulation result, according to the Example of the present invention.

[Figure 13]

A drawing showing an image of an A-B block polymer shown in a simulation apparatus, which is obtained by specifying a part of regions of a 3DTEM image, according to the Example of the present invention.

[Figure 14]

A drawing showing a result of Junction distribution analysis based on the structure of a A-B block polymer, according to the Example of the present invention.

[Figure 15]

(a) shows a drawing of an experiment structure of 3DTEM, and (b) shows a chain structure obtained by a MD analysis.

[Figure 16]

A drawing showing a combination image of a 3DTEM image and a chain image using a molecular dynamics method, according to the Example of the present invention.

[Figure 17]

A drawing showing a result of deformation prediction simulation (FDM) in the case of treating the used polymeric material as an elastic body.

REFERENCE NUMERALS

100, 100': virtual experiment system
101: experiment measurement apparatus
101': three-dimensional image analysis experiment measurement apparatus(experiment measurement apparatus)
102, 102': simulation apparatus(virtual experiment apparatus)
200, 200': virtual experiment interface
201, 201': data acquiring section (data acquiring means)
202, 202': data conversion section (data conversion means)
203, 203': data output section (data output means)
202a, 202a': region specification section (region specification means)
202b, 202b': image scanning section (image reading means)
202c, 202c': numerical conversion section (numerical conversion means)
202d, 202d': format conversion section (format conversion means)
202e': determining section (determining means)
202f': three-dimensional operation section (three-dimensional operation means)

BEST MODE FOR CARRYING OUT THE INVENTION

[First Embodiment]

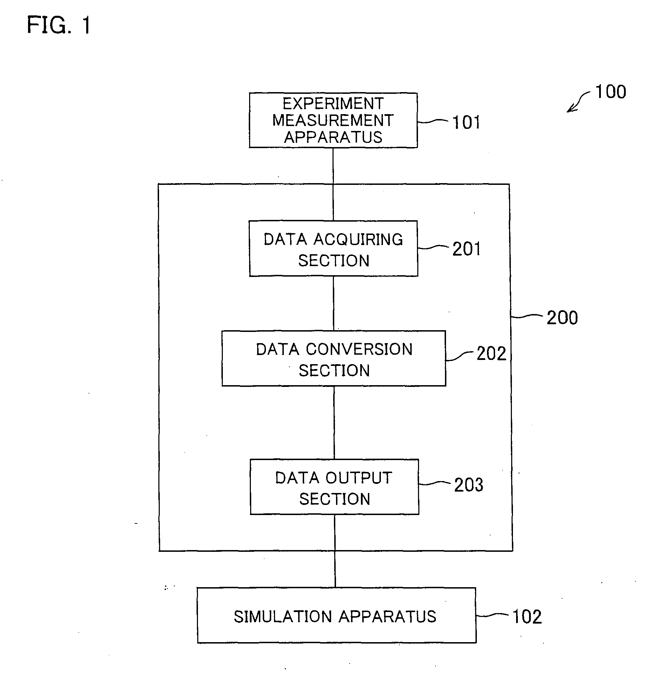

The following describes one embodiment of the present invention with reference to Figures 1 through 4. The present embodiment describes a virtual experiment system 100 in which a simulation apparatus operates in conjunction with an experiment measurement apparatus which acquires a structure of a polymeric material as two-dimensional image data. The association of two apparatuses is achieved via a virtual experiment interface.

Figure 1 is a drawing schematically showing a hardware structure of a virtual experiment system according to the present embodiment. The virtual experiment system 100 includes an experiment measurement apparatus 101, a virtual experiment interface 200, and a simulation apparatus 102. As shown in Figure 1, the experiment measurement apparatus 101 is connected to the virtual experiment interface 200, and the virtual experiment interface 200 is connected to the simulation apparatus 102.

The experiment measurement apparatus 101 is an experiment apparatus capable of obtaining image data of a structure of a polymeric material in an experimental manner. The experiment measurement apparatus 101 may be arranged in some different ways. A microscope is one of typical examples of the experiment measurement apparatus. Particularly preferable microscope are an electron microscope (transmission type, scanning type), X-ray microscope or the like, capable of analysis of the structure of a polymeric material at nanometer (nm) order to micrometer ($\mu$m) order.

Note that, the term "polymeric material" in the present specification denotes a material containing a polymer, which includes not only a polymeric material of an organic polymer such as a multiblock copolymer, but also a mixture system material of an inorganic substance and a polymer or a material containing a polymer of biological system (protein, nucleic acid, lipid), for example, a biomacromolecule such as a biomembrane. Further, it is preferable that a polymeric material have a network-type micro phase separation. Note that, one of the preferable examples of image data of a polymeric material captured by the experiment measurement apparatus is display of the whole density distribution of the polymer component in a manner of contrasting density (eg. display of black/white contrast in the case of a monochrome image).

The simulation apparatus 102 is a virtual experiment apparatus at least capable of simulation operation regarding structural analysis of polymeric material on a computer in a manner of computational science. The simulation apparatus 102 may be arranged in some different ways. The "simulation of structural analysis of polymeric material" here denotes simulation operation regarding analysis of molecular characteristic and/or material characteristic of a polymeric material. Specific examples of such simulation apparatus include a simulator "OCTA" which was developed by a joint project including the inventors of the present invention. The following briefly describes the "OCTA".

"OCTA" is an integrative simulator for soft materials (eg. polymeric material) developed by the joint project of industry and academia funded by Ministry of Economy, Trade and Industry (METI), Japan. "OCTA" is capable of bridging microstructural (or molecular) characteristics of soft materials with their material characteristics in a manner of virtual experiment technology. Soft materials are made of complicated molecules consisting of several ten thousands to several hundreds million of atoms. The soft materials have an internal structure at many levels, and exhibit complex responses over time scales ranging from nano-seconds to years. Theoretical models for soft materials are quite diverse: atomistic models, coarse-grained models, continuum models, and other hybrid models have been proposed to deal with mesoscopic phenomena of soft materials. They are based on different physical concepts and have disparate data structures.

Under such a circumstance the inventors of the present invention have developed the "OCTA" as an integration machine of the various models. OCTA consists of four simulation engines ("COGNAC", "PASTA", "SUSHI", "MUFFIN") and a simulation platform ("GOURMET"). The simulation engines can carry out the simulations of molecular dynamics, reptation dynamics, interfacial dynamics, gel dynamics, two-fluid dynamics etc, and the simulation platform gives a common graphical user interface to all engines, providing an environment for various engines to work together. (access to http://octa.jp for more details of "OCTA").

The virtual experiment interface 200 includes a data acquiring section 201, a data conversion section 202, and a data output section 203. The data acquiring section 201 serves as data acquiring means for acquiring experimental structure data obtained by the experiment measurement apparatus 101. The data conversion section 202 serves as data conversion means for converting the experimental structure data obtained by the data acquiring section 201 into a format compatible with the simulation apparatus 102. The data output section 203 serves as data output means for outputting the data converted by the data conversion section 202 to the simulation apparatus 102.

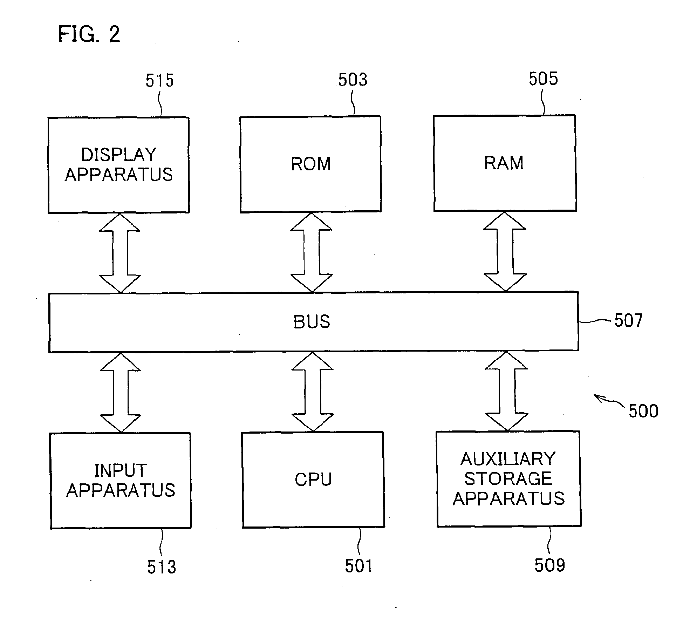

The virtual experiment interface 200 may be realized by some kind of hardware structure such as an information processing apparatus. Figure 2 schematically shows a hardware structure of an information processing apparatus used as a virtual experiment interface according to the present invention.

An information processing apparatus 500 includes a central processing unit (CPU) 501 and a RAM (Random Access Memory) 505 serving as a temporary storage region. The CPU 501 and the RAM 505 are connected to an auxiliary storage apparatus 509 and a ROM (Read-Only Memory) 503 via a bus 507.

The auxiliary storage apparatus 509 is realized by a hard disk, a flexible disk, a CD-ROM, a DVD (Digital Video Disk) etc. The ROM 503 is a read-only non-volatile storage apparatus using an integrated circuit. The auxiliary storage apparatus 509 and the ROM 503 store a computer program loaded by the RAM 505 for giving arbitrary instructions to the CPU 501 etc. so as to perform the operations regarding the present invention.

The display apparatus 515 is realized by a LCD (Liquid Crystal Display), CRT (Cathode-Ray Tube) or the like. The input apparatus 513, which serves to input characters, numbers etc., is realized by keyboard, mouse, or a pointing device such as trackball. These components are also connected together via the bus 507.

The functions of the present invention are achieved by executing a computer program stored in the ROM 503 or the auxiliary storage apparatus 109 by a CPU 501. That is, the information processing apparatus 500 is characterized by being capable of executing a program required for the later-described information processing. This information processing apparatus 500 enables the experiment measurement apparatus 101 and the simulation apparatus 102 to interlock with each other, so as to carry out simulation operation, such as pattern prediction or property prediction, based on an experimental structure of polymeric material.

The data conversion section 202 of a virtual experiment interface 200 preferably serves to carry out data conversion into a format which can be processed by virtual experiment apparatus which performs simulating structure analysis of a polymeric material. More specifically, for example, the data conversion section 202 converts image data (pixel data) into a volume fraction value. The following explains function mechanism of the data conversion section 202 in the virtual experiment interface 200.

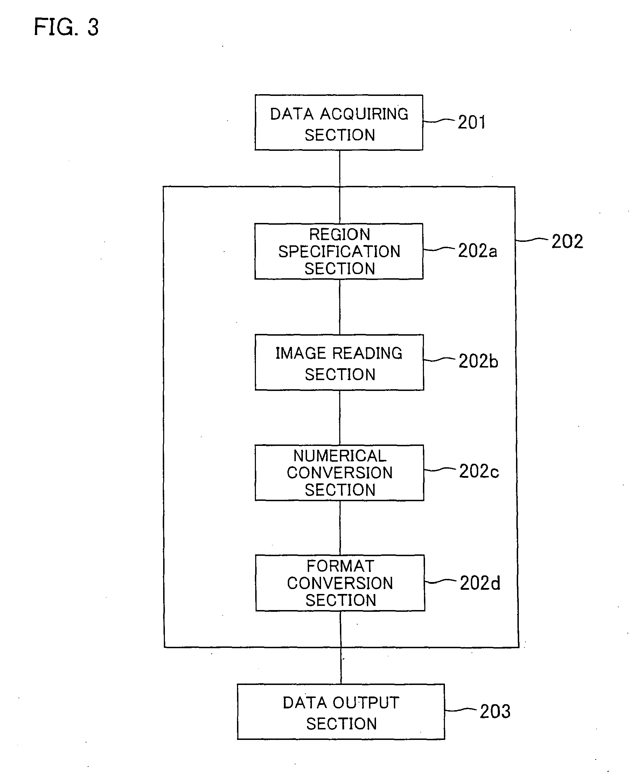

As shown in Figure 3, the data conversion section 202 includes a region specification section 202a, an image reading section 202b, a numerical conversion section 202c, and a format conversion section 202d. The region specification section 202a serves as region specification means for specifying a region to be subjected to image processing among the two-dimensional data acquired by the data acquiring section 201. The image reading section 202b serves as image reading means for reading a pixel value for each pixel in the region specified by the region specification section 202a. The numerical conversion section 202c serves as numerical conversion means for converting the pixel value read by the image reading section 202b into a volume fraction value. The format conversion section 202d serves as format conversion means for converting (rewriting) the volume fraction value obtained by the numerical conversion section 202c into a format which can be processed by the simulation apparatus 102. The format conversion section 202d also writes a coordinate data (position information) for each pixel.

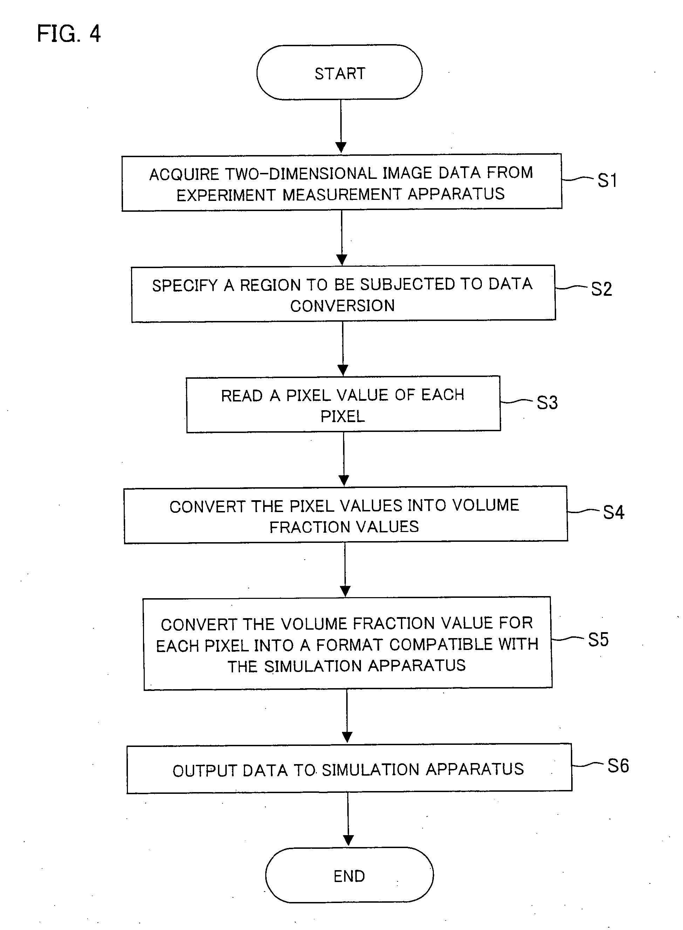

Figure 4 shows a sequence of the operation carried out by the virtual experiment interface 200. Carried out first is acquirement of two-dimensional image data showing a structure of polymeric material from the experiment measurement apparatus 101, which is performed by the data acquiring section 201 (Step S1). Next, the region specification section 202a of the data conversion section 202 specifies a region to be subjected to data conversion among the two-dimensional image data (Step S2). Then, the image reading section 202b reads a pixel value for each pixel in the region specified by the region specification section 202a (Step S3).

Next, the numerical conversion section 202c converts the pixel value read by the image reading section 202b into a volume fraction value (Step S4). Next, the format conversion section 202d converts (rewrites) a volume fraction value obtained by the numerical conversion section 202c to a format which can be processed by a simulation apparatus 102, and outputs data of the format to the output section 203 (Step S5). Finally, the data output section 203 outputs the data to the simulation apparatus 102 (Step S6), and the sequence is completed.

The following more specifically explains the sequence performed by the virtual experiment interface 200.

<Step S1>

In Step S1, the data acquiring section 201 carries out operation for acquiring two-dimensional image data showing a structure of a polymeric material from the experiment measurement apparatus 101. This image data received by the data acquiring section 201 is two-dimensional image data, which is obtained by observation of the structure of a polymeric material with the experiment measurement apparatus 101. A typical example is an observation image of a polymeric material given by a microscope (transmission electron microscope). The image format of this two-dimensional image data is not limited. Any conventional formats may be used for this two-dimensional image data. For example, a versatile format such as JPEG, TIFF, GIF, BMP, PNG, PCX etc. may be used. Note that, in the later-described "Example", an image file (TIFF format) obtained by observation of a multiblock copolymer of polystyrene (PS) and polyisoprene (PI) with a transmission electron microscope is loaded to the interface as an image object by the data acquiring section 201.

<Step S2>

In Step S2, the region specification section 202a of the data conversion section 202 carries out operation for specifying a region to be subjected to data conversion among the two-dimensional image data. More specifically, this operation specifies a region used for the following conversion operation among the image data acquired from the experiment measurement apparatus 101 by the data acquiring section 201. The way of specifying is not particularly limited, and may be any suitable conventional region specifying method may be used. For example, the region specifying may be carried out by specifying the upper limit value and the lower limit value of an arbitrary absolute position of the pixel with respect to x and y axes of the two-dimensional image data. Another example may be a region specifying method according to a predetermined rule, for example, constantly specifying a predetermined position of the two-dimensional image data such as a position A on the x-axis and a position B on the y-axis. The later-mentioned "Example" of the present specification describes a process of reading a value of the UDF file. The "x and y" in this case denote absolute positions of the two-dimensional image data, and indicate a predetermined values of X and y axes.

Note that, the region specification step of Step S2 is not always required, and may be omitted. In this case, the image data obtained by the experiment measurement apparatus 101 is subjected to the operation of Step S3 and later steps without modification. In this case, the data conversion section 202 does not have to have the region specification section 202a. However, this case has some problems, for example, the process amount becomes larger than necessary, and causes a decrease in processing speed. In this view, it is preferable to carry out the region specification step of Step S2.

<Step S3>

In Step S3, the image reading section 202b carries out operation for reading a pixel value of each pixel in the region specified by the region specification section 202. This is so-called gray scale conversion (quantization). This process is also not particularly limited, and may be carried out by any suitable conventional method. For example, the gray scale conversion may be done by sequentially reading the pixel values in the absolute position of the x and y axes on the image specified in Step S2. In the later-described "Example", a monochrome image is used as the image data, and therefore one of 256 gray scale levels is read for each pixel, but in a RGB image, three of 256 gray scale levels are read. The gray scale levels may of course be more than 256 levels.

<Step S4>

In Step S4, the numerical conversion section 202c carries out conversion operation of the pixel values read by the image reading section 202b into volume fraction values. The "volume fraction value" designates a value of a volume ratio occupied by a component in a certain space. In other words, a volume fraction of A component out of plural components can be expressed by the following mathematical formula (1).

$$\Phi A = (\text{occupied volume of A component in a certain}$$

$$\text{volume V})/(\text{the volume V}) \quad ...(1)$$

For example, assume that the image contains A and B components, they have a relationship expressed by the following mathematical formula (2) where their volume fractions are expressed as $\Phi A$ and $\Phi B$, respectively.

$$\Phi A + \Phi B = 1 \quad ...(2)$$

This operation for converting the pixels values of the image into volume fraction values allows direct transition of data to a virtual experiment apparatus such as a simulation apparatus. If the direct transition is not necessary, the data of 256 gray scales is not required to be modified.

The conversion operation into volume fraction value may be carried out as follows, for example. For better understanding, the following method is described in accordance with the manner of the later-described "Example".

The image data used in the later-described "Example" was a monochrome image with 256 gray scales. A multiblock copolymer of polystyrene (PS) and polyisoprene (PI) was observed with a transmission electron microscope, and the captured image was roughly broken into a white region and a black region. In this example, the white region corresponds to a region having high PS concentration (volume fraction), and the black region corresponds to a region having high PI concentration (volume fraction).

However, since the respective concentrations are measured on an image, the values are changeable depending on the measurement condition. In the virtual experiment (simulation) carried out later with the simulation apparatus 102, the maximum (or minimum) volume fraction for each phase of the image in which block copolymers are broken into PS and PI phases may be determined according to the type of polymer. In this example, the maximum volume fractions of the PS and PI phases are both 0.8.

According to this theory, the numerical conversion section 202c converts the pixel value of the image into a volume fraction value according to the maximum (or minimum) volume fraction for each polymer set in the simulation apparatus 102. For example, when the 256 gray scale values on an image are distributed in a range of 100 to 240, the lower and upper values of pixel value, that are 100 and 240, are respectively converted into the lower and upper values of volume fraction value, which are 0.2 and 0.8, so that they linearly correspond to each other. To specifically express this operation in a formula, the volume fraction value is expressed by the following mathematical formula (3) when the data has "x" level out of 256 gray scale levels.

$$volume \quad fraction$$
$$value=(x-100)/(240-100)\times(0.8-0.2)+0.2 \quad ...(3)$$

Therefore, the numerical conversion section 202c preferably carries out operation for associating the lower and upper values of pixel value of the image with the lower and upper values of volume fraction set in the simulation apparatus. In this case, the upper and lower values of volume fraction are determined according to the bulk simulation of the material in the experiment. That is, the lower and upper values of volume fraction are set to the lower and upper values of pixel value, and the rest of values are converted so that they linearly correspond to values in-between.

<Step S5>

In Step S5, the format conversion section 202d converts (rewrites) the volume fraction value obtained by the numerical conversion section 202c into a format compatible with the simulation apparatus 102 before outputting the data to the data output section 203. The "conversion into a format compatible with the simulation apparatus (virtual experiment apparatus) 102" means conversion of data format by the format conversion section 202d into an arbitrary form which can be processed by an arbitrary simulation apparatus among various simulation apparatuses using various formats.
For example, the operation in Step S5 can be described as a step of converting the data converted into a volume fraction value by the numerical conversion section 202c into a format compatible with the target simulation apparatuses 102 with which the experiment measurement apparatus 101 is to be associated. Further, in this case, the coordinate data (position information) corresponding to each pixel, namely the values of x and y, is also written.
The values of x and y are the same as those in Step S2, which indicate the absolute position of the pixel. Note that, in the later-described "Example", the "OCTA" capable of processing of UDF file format data is used as a simulation apparatus, and therefore the format conversion section 202d writes UDF file format data from the data converted by the numerical conversion section 202c.

<Step S6>

In Step S6, the data output section 203 outputs data to the simulation apparatus 102. Since the data was rewritten into a format compatible with the simulation apparatus 102 in Step S5, the data output section 203 simply output the data to the simulation apparatus 102.
As described, with the virtual experiment interface of the present embodiment, the experiment measurement apparatus and the simulation apparatus may easily and securely interlock with each other. Therefore, a virtual experiment can use the experiment structure (two-dimensional image data) obtained by the experiment measurement apparatus for simulation. This enables simulation reflecting a real system to further extent. Further, it also becomes possible to carry out a minute analysis which is not possible in a real experiment apparatus.

[Second Embodiment]

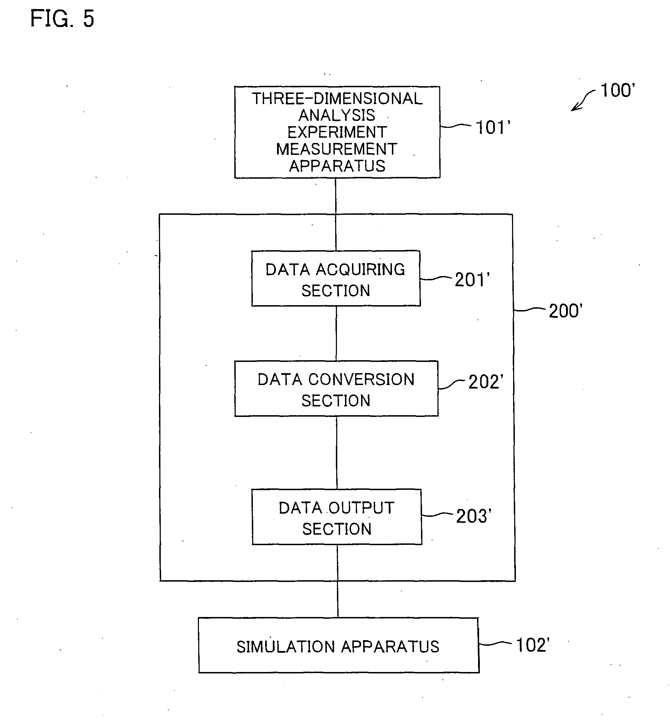

The following explains another embodiment of the present invention with reference to Figures 5 to 7. Note that, for ease of explanation, materials having the equivalent functions as those shown in the drawings pertaining to the foregoing First Embodiment will be given the same reference symbols, and explanation thereof will be omitted here. The present embodiment describes only the difference from First Embodiment.
The present embodiment describes a virtual experiment system 100' in which an experiment measurement apparatus interlocks with a simulation apparatus. In this system, the virtual experiment interface, which is capable of observation of a structure of polymeric material as three-dimensional image data, is used as the experiment measurement apparatus.
Figure 5 schematically shows a hardware structure of the virtual experiment system according to the present embodiment. The virtual experiment system 100' includes a three-dimensional analysis experiment measurement apparatus 101', a virtual experiment interface 200', and a simulation apparatus 102'.
Suitable examples of the three-dimensional analysis experiment measurement apparatus 101' used in the present embodiment include a three-dimensional transmission electron microscope, three-dimensional x-ray microscopes, and confocal laser scanning microscope, which are capable of analysis of a structure of polymeric material in the form of three-dimensional data. Note that, the three-dimensional analysis experiment measurement apparatus 101' is only required to be capable of analysis of a structure of polymeric material in the form of three-dimensional data. Therefore the three-dimensional analysis experiment measurement apparatus 101' is not limited only to the listed microscopes.

The following briefly explains a basic principle of the three-dimensional analysis experiment measurement apparatus 101' which is here realized by a three-dimensional transmission electron microscope. First, an electron beam focused to subnanometer order (1/10000000 mm) is increased in speed and emitted to the surface of a sample while scanning on the surface. The electron beam interacts with atoms constituting the sample before coming out of the surface. That is, a two-dimensional electron microscope image can be obtained by measuring the strength of the electron beam, and displaying in a monitor the obtained values in synchronism with the scanning point on the sample. These operations are the same as those of a general TEM. Thereafter, this process is repeated while gradually inclining the sample, and the resulting number of two-dimensional images are processed by a computer. As a result, a stereoscopic (three-dimensional image) is formed. Note that, the three-dimensional image thus produced is constituted of many of two-dimensional image layers.

That is, the three-dimensional image data is constituted by rearranging many (plural) items of two-dimensional image data, and therefore is constituted of a large number of two-dimensional image data items (eg., by layering a large number of two-dimensional image items). Based on this structure, the following explains a virtual experiment interface 200' according to the present embodiment.

The following explains a virtual experiment interface 200' according to the present embodiment, which is capable of processing three-dimensional image data constituted of the plural two-dimensional image data items. As shown in Figure 5, the virtual experiment interface 200' includes a data acquiring section 201', a data conversion section 202', and a data output section 203'.

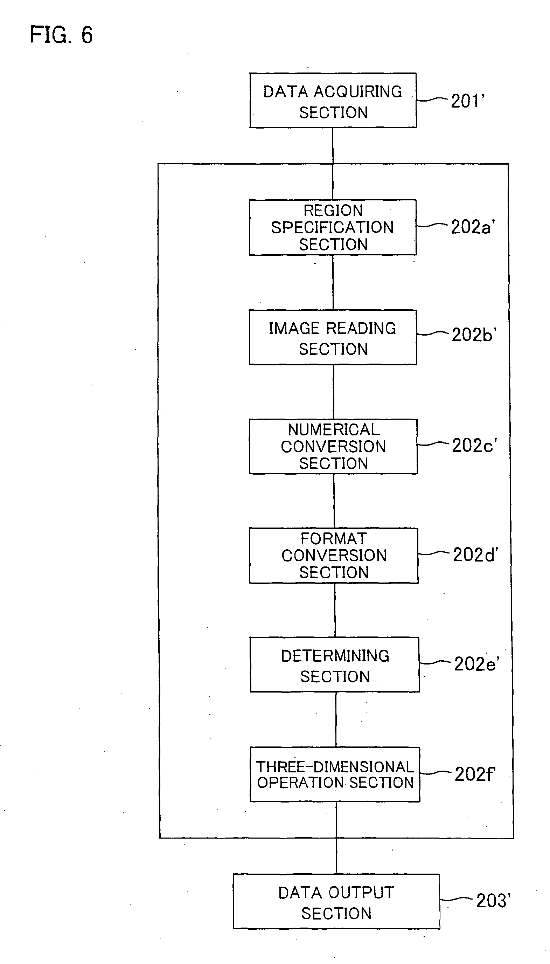

First, the data acquiring section 201' acquires plural two-dimensional image data items for constituting three-dimensional image data from the three-dimensional analysis experiment measurement apparatus 101'. Then, the plural two-dimensional image data items acquired by the data acquiring section 201' are transmitted to the data conversion section 202'. The following explains the data conversion section 202' with reference to Figure 6.

Figure 6 is a block diagram schematically showing a functional structure of data conversion section 202' of the virtual experiment interface 200' according to the present embodiment. As shown in the figure, the data conversion section 202' includes a region specification section 202a', an image reading section 202b', a numerical conversion section 202c', a format conversion section 202d', a determining section 202e', and a three-dimensional operation section 202f'.

The region specification section 202a' serves to function as region specification means for specifying a region subjected to image processing in an arbitrary item of the two-dimensional image data among the plural two-dimensional image data items acquired by the region specification section 202a'. The image reading section 202b' serves as image reading means for reading a pixel value for each pixel in the region specified by the region specification section 202a'. The numerical conversion section 202c' serves as numerical conversion means for converting the pixel value read by the image reading section 202b' into a volume fraction value. The format conversion section 202d' serves as format conversion means for converting (writing) the volume fraction value obtained by the numerical conversion section 202c' into a format compatible with the simulation apparatus 102'. Further, the format conversion section 202d' writes coordinate data (position information) for each pixel.

The determining section 202e' serves as determining means for determining whether the process sequence by the region specification section 202a', the image reading section 202b', the numerical conversion section 202c', and the format conversion section 202d' is completed for all of the two-dimensional image data items constituting the three-dimensional image data. When the determining section 202e' concluded that the process sequence was not completed for all of the two-dimensional image data items, the determining section 202e' operates to carry out the process sequence by the image reading means, the numerical conversion means, and the format conversion means for unprocessed two-dimensional image data items. On the other hand, when the determining section 202e' concluded that the process sequence was completed for all of the two-dimensional image data items, the determining section 202e' operates to output the all processed data items to the three-dimensional operation section 202f'. The three-dimensional operation section 202f' serves as three-dimensional operation means for rearranging the plural two-dimensional image data items written into data of the format compatible with the simulation apparatus 102' by the format conversion section 202d' so as to form three-dimensional data, when the determining section 202e' concluded that the conversion process sequence was completed for all of the two-dimensional image data items constituting the three-dimensional image data.

The data output section 203' serves to output the three-dimensional data produced through rearrangement of the three-dimensional operation section 202f' to the simulation apparatus 102'.

The simulation apparatus 102' may be any apparatus capable of simulation operation for a polymeric material based on the three-dimensional data. The simulation apparatus 102' is appropriately realized by the "OCTA" used in First Embodiment, for example.

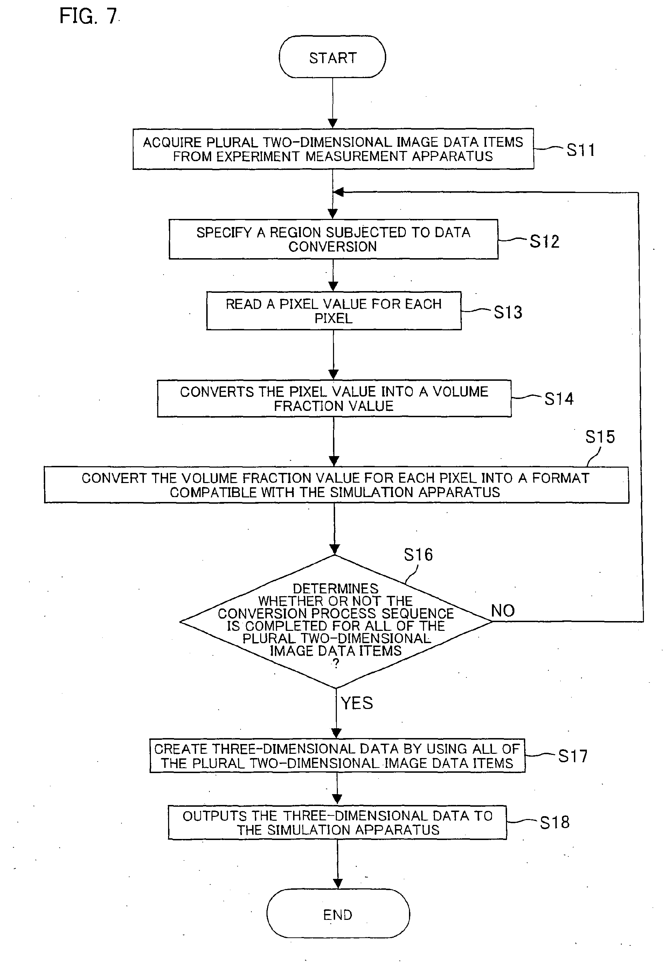

Figure 7 is a drawing showing a sequence of operation performed by a virtual experiment interface according to another embodiment of the present invention. The first step is carried out to acquire plural two-dimensional image data items constituting the three-dimensional image data (Step S11). Next, the region specification section 202a' of the data conversion section 202' specifies a region subjected to data conversion in an arbitrary two-dimensional image data item among the plural two-dimensional image data items (Step S12). Next, the image reading section 202b' reads a pixel value for each pixel in the region specified by the region specification section 202a' (Step S13).

Then, the numerical conversion section 202c' converts the pixel value read by the image reading section 202b' into a volume fraction value (Step S14). Next, the format conversion section 202d' converts (rewrites) the volume fraction value obtained by the numerical conversion section 202c' into a format compatible with the simulation apparatus 102' (Step S15). The sequence from Step S12 to Step S15 is repeated for the amount (number of layers) of the two-dimensional image data to convert the entire two-dimensional image data items.

Then, the determining section 202f' determines whether or not the conversion process sequence of Step S12 to Step S15 is completed for all of the plural two-dimensional image data items constituting the three-dimensional image data (Step S16). Then, the three-dimensional operation section 202f' composes three-dimensional data with all of the plural two-dimensional image data items having been through Step S12 to Step S15, and transmits the resulting data to the data output section 203' (Step S17). The data output section 203' outputs the three-dimensional data composed by the three-dimensional operation section 202f' to the simulation apparatus 102', and finishes the sequence (Step S18).

Next, the following more minutely explains these operations by the virtual experiment interface 200'.

<Step S11>

In Step S11, the data acquiring section 201' carries out operation for acquiring three-dimensional image data showing a structure of polymeric material from the three-dimensional analysis experiment measurement apparatus 101'. As described, the three-dimensional image data is produced by rearranging, on a calculation apparatus such as a computer, a plurality of two-dimensional image data items denoting a structure of polymeric material. That is, the three-dimensional image data may be considered a group composed of plural two-dimensional image data items.

Therefore, the data acquiring section 201' acquires the three-dimensional image data showing a structure of polymeric material as a group of two-dimensional image data items, in other words, the data acquiring section 201' acquires plural two-dimensional image data items. Note that, though this operation handles a larger amount (number of layers) of two-dimensional image data items, it can be carried out in the same manner as that of the step of acquiring the two-dimensional image data of First Embodiment.

<Step S12>

In Step S12, the region specification section 202a' specifies a region subjected to data conversion in an arbitrary two-dimensional image data item among the plural two-dimensional image data items. At this stage, the region specification section 202a' can process an arbitrary image data item among the plural two-dimensional image data items, but the processing may otherwise be carried out in accordance with a specific rule. For example, the data items may be processed in order of coordinate position in the z-axis direction in the three-dimensional image data. The process may be carried out by substantially the same manner as that of First Embodiment.

<Steps S13 and S14>

Steps S13 and S14 may be carried out in the same manner as that of First Embodiment, and therefore minute explanation of those is omitted.

<Step S15>

In Step S15, the format conversion section 202d' converts (rewrites) the volume fraction value obtained by the numerical conversion section 202c' into a format compatible with the simulation apparatus 102'. Further, at this time, the format conversion section 202d' also writes coordinate data (position information) for each pixel. Particularly, unlike the operation of First Embodiment, the coordinate of z-axis is written in addition to the values of x and y axes.

For example, in the case of three-dimensional image data constituted of plural two-dimensional image data layers, the pixel data is converted into a volume fraction value in Step S15. Then, the volume fraction value is stored as a value of an arbitrary point of a three-dimensional simulation box. The absolute position of the three-dimensional simulation box is expressed as x, y, and z. In other words, the absolute position is determined to a point expressed by the same x and y of the two-dimensional image, and a z-value which denotes the direction of the layer. More specifically, the x and y values correspond to the coordinate value of the absolute pixel, and the value of z is expressed by z-th layer x (interval between images). The "interval between images" may otherwise be expressed as "interval between layers" in the case of three-dimensional image data constituted of plural two-dimensional image data layers.

In the later-described "Example", the "OCTA" is used as the simulation apparatus. Since the "OCTA" is capable of processing data of UDF file format, the format conversion section 202d' carries out operation for rewriting the data converted by the numerical conversion section 202c' into the UDF file format.

Note that, the sequence of Steps S12 to S15 is repeated for the amount (number of layers) two-dimensional image data, so as to carry out the conversion operation for the entire two-dimensional image data.

<Step S16>

In Step S16, the determining section 202f' determines whether or not the conversion process sequence of Step S2 to Step S5 is completed for all of the plural two-dimensional image data items constituting the three-dimensional image data. If the determining section 202f' concluded that the conversion process sequence of Step S2 to Step S5 was not completed for all of the plural two-dimensional image data items constituting the three-dimensional image data, the determining section 202f' operates to carry out the conversion process sequence of Step S2 to Step S5 for all of unprocessed two-dimensional image data items. On the other hand, if the determining section 202f' concluded that the conversion process sequence of Step S2 to Step S5 was completed for all of the plural two-dimensional image data items constituting the three-dimensional image data, the determining section 202f' instructs the three-dimensional operation section 202f' to compose three-dimensional data by using all of the two-dimensional data items having been through the conversion process of Step S2 to Step S5.

Note that, the composition of three-dimensional image data by the three-dimensional operation section 202f' may be carried out even when the conversion process sequence of Step S2 to Step S5 is not completed for all of the plural two-dimensional image data items constituting the three-dimensional image data. More specifically, the composition may be carried out at the time where the conversion of a certain amount of two-dimensional image data is completed. However, in order to carry out simulation with more accurate experiment structure, it is preferable to compose the three-dimensional image data after all of the two-dimensional image data items are subjected to the conversion process.

<Step S17>

In Step S17, the three-dimensional operation section 202f' composes the three-dimensional data by using all of the two-dimensional image data items having been through the conversion process sequence of Step S2 to Step S5 (the two-dimensional data resulted from subjecting all of the plural two-dimensional image data items constituting the three-dimensional image data to the conversion process sequence of Step S2 to Step S5), and carries out operation for transmitting the resulting data to the data output section 203'.

For example, an image expressed by 256 gray scales between black and white is converted into an image expressed by volume fraction values, and the converted image is outputted as a data item of the input/output file used for a simulation calculation called UDF.

<Step S18>

In Step S18, the data output section 203' outputs three-dimensional data composed by the three-dimensional operation section 202f' to simulation apparatus 102', and finishes the sequence. The simulation apparatus 102' according to the present embodiment carries out simulation operation with this three-dimensional data, and therefore the data output section 203' is only required to simply output the three-dimensional data to the simulation apparatus 102'.

As described, virtual experiment interface according to the present embodiment allows an experiment measurement apparatus and a simulation apparatus to interlock with each other in an easy and secure manner. On this account it become possible to carry out a virtual experiment with an experiment structure (three-dimensional image data) obtained by a three-dimensional analysis experiment measurement apparatus, and therefore the experiment reflects a real system to further extent. Further, it also becomes possible to carry out a minute analysis which is not possible in a real experiment apparatus.

To develop "nano materials" currently attracting attention as a new material, the first objective to be achieved is observation and measurement of the three-dimensional (stereoscopic) structure at nanometer order. With this aim three-dimensional electron microscopes have been developed. However, there is a limit of resolution of three-dimensional electron microscopes. For example, an image of a multiblock copolymer observed by a three-dimensional electron microscope allows analysis no further than the concentration distribution. On the other hand, the virtual experiment interface of the present invention which enables a three-dimensional electron microscope to interlock with a simulation apparatus allows, for example, acquirement of more precise analysis result such as information regarding distribution condition of a single polymer chain. Proper understanding of nano structure will contribute to meet a demand for development of new nano materials. The present invention allows a lot of people to obtain new information they never obtained.

Furthermore, because nano materials are applicable to so many fields including electronics, biology, photonics, material etc., it is likely to be useful for biological or medical purposes.

Note that, though this specification has been explaining a virtual experiment interface which is separated from the experiment measurement apparatus and the simulation apparatus, the present invention of course includes a virtual experiment interface combined with the experiment measurement apparatus or the simulation apparatus. More specifically, since the virtual experiment interface according to the present invention can be realized by a calculation apparatus, combining the virtual experiment interface with an experiment measurement apparatus or a simulation apparatus can be easily achieved by a person in the art.

Each block of the virtual experiment interface 200 or 200', particularly the data conversion section 202 or 202', may be constituted based on a hardware logic, or may be realized by software as follows.

Specifically, the virtual experiment interface 200 or 200' of the present invention includes, for example, a CPU (Central Processing Unit) for enforcing instructions of a control program for carrying out the respective functions; a ROM (Read Only Memory) for storing the program; a RAM (Random Access Memory) for developing the program; and a storage device (storage medium) such as a memory for storing the program and various data. Further, the objective of the present invention may also be achieved by providing a storage medium storing a computer-readable program code (execute form program, intermediate code program, source program) of the foregoing control program to the virtual experiment interface 200 or 200', and reading out and executing the program code in the medium by the computer (or, by CPU, MPU).

Examples of the program medium include (a) a tape system such as a magnetic tape, a cassette tape or the like, (b) a disk system which includes a magnetic disk such as a floppy disk*tm*, a hard disk or the like and an optical disk such as a CD-ROM, an MO, an MD, a DVD or the like, (c) a card system such as an IC card (inclusive of a memory card), an optical card or the like, and (d) a semiconductor memory such as a mask ROM, an EPROM, an EEPROM, a flash ROM.

Further, the virtual experiment interface 200 or 200' may be constituted to be connectable to a communication network, so as to allow provision of the program code via a communication network. The communication network is not particularly limited, and it may be: the Internet, Intranet, Extranet, LAN, ISDN, VAN, CATV communication network, virtual private network, telecommunication network, mobile body communication network, satellite communication network etc. Further, a transmission medium for constituting the communication network is not particularly limited, and it may be wired based, such as IEEE1394, USB, power-line carrier, cable TV line, telephone line, ADSL line, or radio based, such as infrared medium such as IrDA, remote control, Bluetooth, 802.11 radio, HDR, mobile phone network, satellite communication line, ground wave digital network. Note that, the present invention may be realized in the form of a carrier wave, or a data signal line that realizes the program code by electronic transmission.

The following more specifically explain enforcement of the present invention with a concrete example. The present invention is however not limited to the following example, and the details may be altered in many ways. The present invention is not limited to the description of the embodiments above, but may be altered by a skilled person within the scope of the claims. An embodiment based on a proper combination of technical means disclosed in different embodiments is encompassed in the technical scope of the present invention.

[Example]

As one example of enforcement of the present invention, the following shows a result of simulation operation. This simulation was carried out based on an experiment structure of polystyrene (PS) and polyisoprene (PI) polymeric material (PS-PI block) obtained from a three-dimensional electron microscope (3DTEM). The simulation was carried out by supplying the experiment structure into a simulation apparatus "OCTA" via a virtual experiment interface. Note that, the PS-PI block forms a network-type micro phase separation structure.

Figure 8 is a drawing showing plural two-dimensional image data items constituting a three-dimensional image of 3DTEM of a polymeric material formed of PS and PI. The image data of Figure 8 is multilayered two-dimensional image data of TIFF format 256x256 pixel and 1.8$\mu$m sqr., obtained through 3DTEM. As shown in the figure, the image observed through a 3DTEM shows a deformed lamellar structure, but the resolution was coarse which only allowed display of the entire concentration distribution of the polymeric component such as PS or PI concentration distribution by contrasting density. In the figure, the white region corresponds to a region having high PS concentration, and the black region corresponds to a region having high PI concentration.

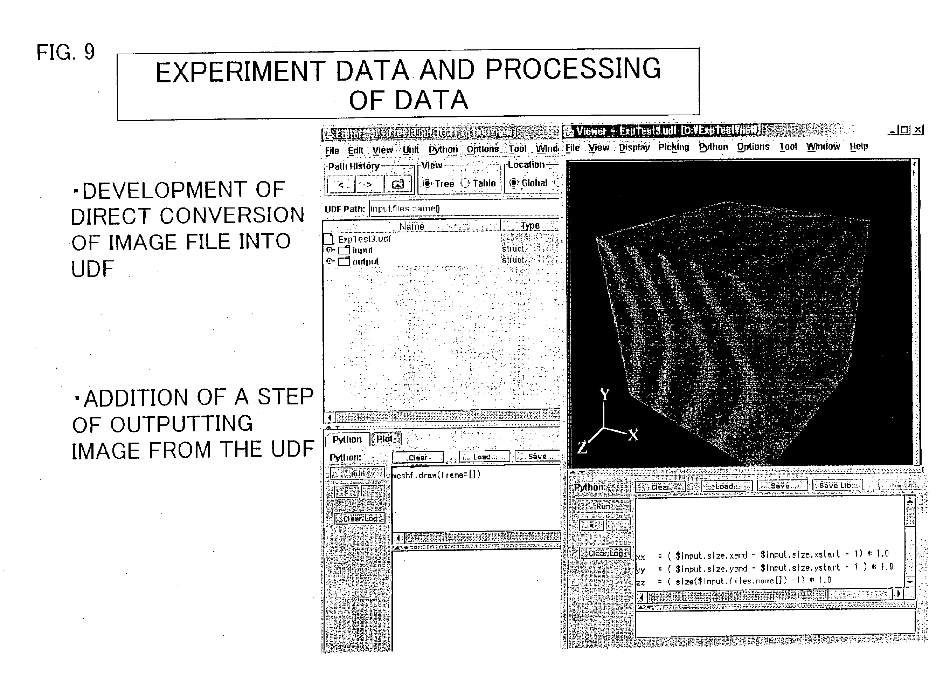

Figure 9 is a drawing showing a process image for converting the foregoing experiment data into a format compatible with the target simulation apparatus. More specifically, the two-dimensional image data is converted by the virtual experiment interface into a format compatible with the simulation apparatus "OCTA". The conversion process has the following steps (i) to (vi).

(i) load (open) an image file as an image object

(ii) specify the lower and upper values of an absolute position of the pixel in terms of x and y axes (in actual state this corresponds to reading of values of the UDF file)

(iii) sequentially read the pixel values of an image residing in the absolute position specified in the step (ii) (in actual state this corresponds to reading of a value out of 256 monochrome gray scale levels for each pixel)

(iv) convert the obtained value into a volume fraction value of 0.0 to 1.0 (Note that, the upper and lower values of volume fraction are determined according to the bulk simulation of the material in the experiment. That is, the lower and upper values of volume fraction are set to the lower and upper values of pixel value, and the rest of values are converted so that they linearly correspond to values in-between)

(v) rewrites the values converted into volume fraction values into UDF. The values of x, y, and z are written at this time. These x and y indicate the absolute pixel position, and z indicates (i) z-layer $\times$ (interval between images).

(vi) repeat the sequence from (i) to (v) for the number of image layers, and produce three-dimensional data

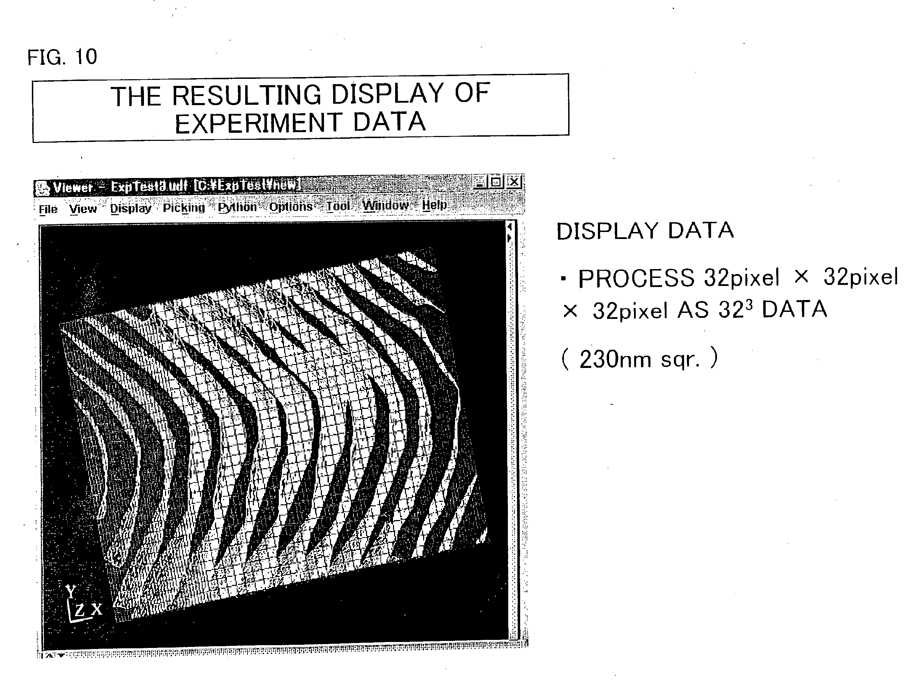

Figure 10 is a drawing showing an experiment structure of a 3DTEM image, shown in a screen of a simulation apparatus "OCTA" as a result of the foregoing conversion. The figure shows an image of 230nm sqr., resulting from processing of 32pixelx32pixelx32pixel data into 323 data items.

Next, some simulations were performed based on the foregoing experiment structure with the simulation apparatus "OCTA". The following first explains conversion into mean-field engine (the name of the engine in "OCTA";"SUSHI") and execution. The following process sequence of (i) to (vi) was performed.

(i) create UDF of mean-field (SUSHI) engine

(ii) set the experiment data UDF as an initial structure

(iii) fit the respective densities of PS and PI blocks with the total density

(iv) determine chain length, and x (currently any value is OK)

(v) run mean-field engine, iterate a round of time development.

(vi) obtain "density $\Phi(r,n)$".

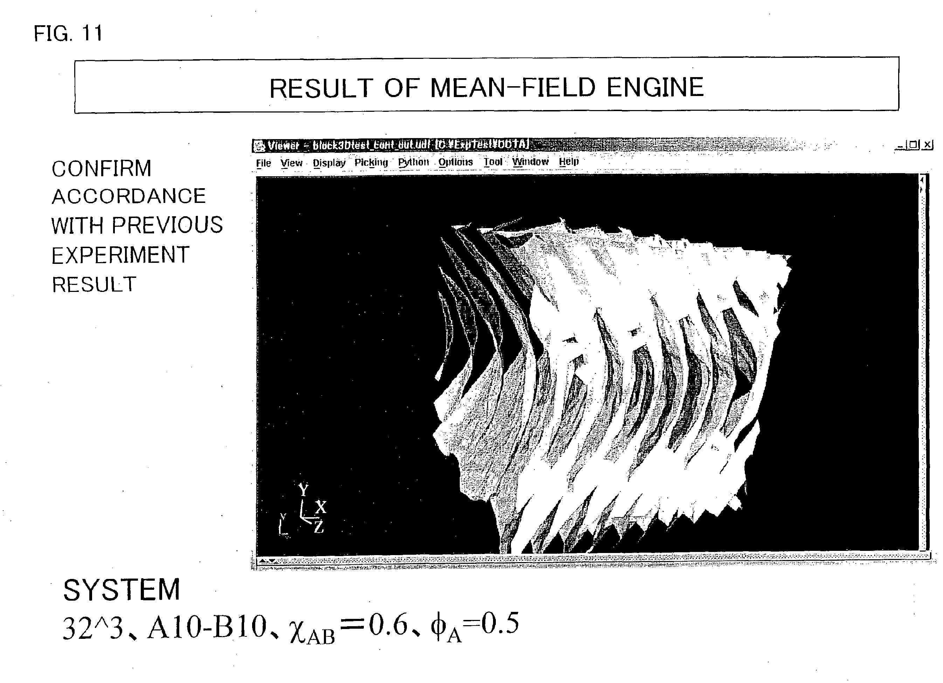

Figure 11 shows a result of mean-field engine. It was confirmed that this result was identical to the result of 3DTEM image. Note that, the system was set to 323, A10-B10, xAB=0.6, $\Phi A$=0.5.

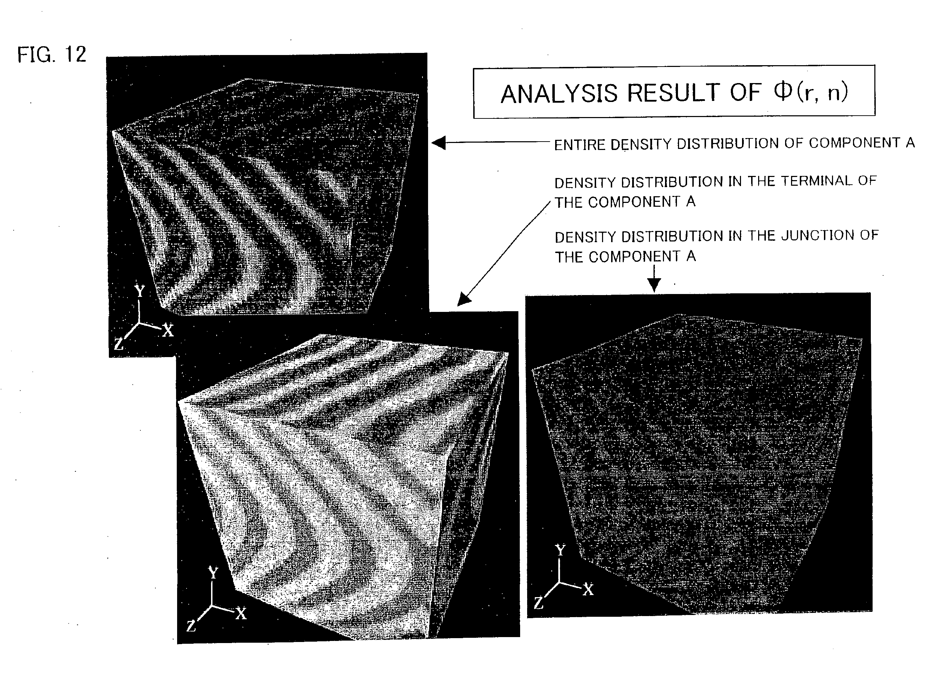

Next, the result of $\Phi(r,n)$ was analyzed, as shown in Figure 12. Figure 12 shows the entire density distribution of component A, density distribution in the terminal of the component A, and density distribution in the junction of the component A.

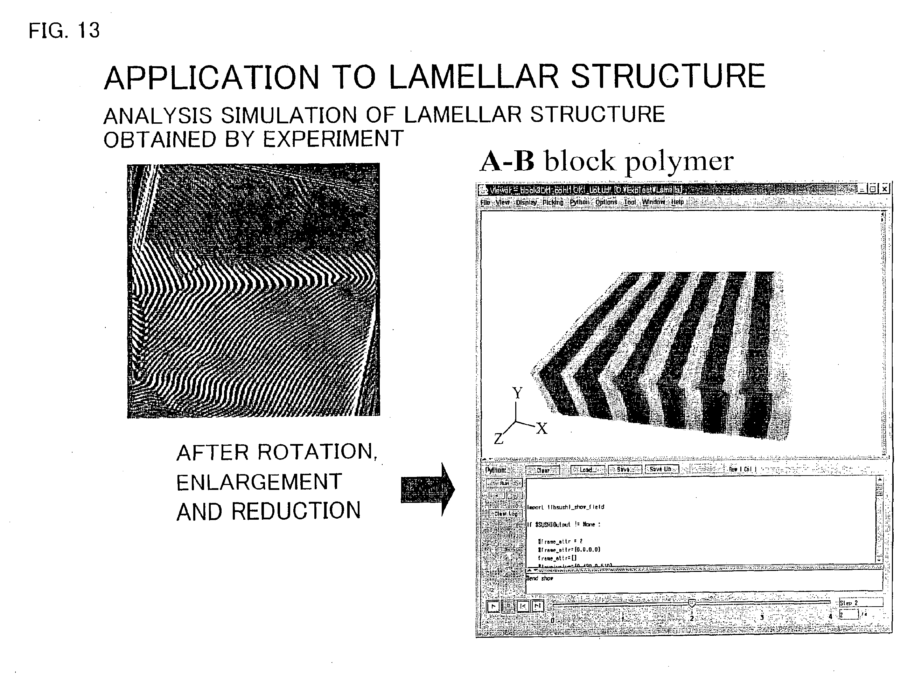

Next, analysis simulation was performed with lamellar structure obtained by an experiment. More specifically, As shown in Figure 13, a region of the 3DTEM image was specified, and the region was rotated, enlarged and reduced, so that a structure of A-B block polymer is displayed in the simulation apparatus.

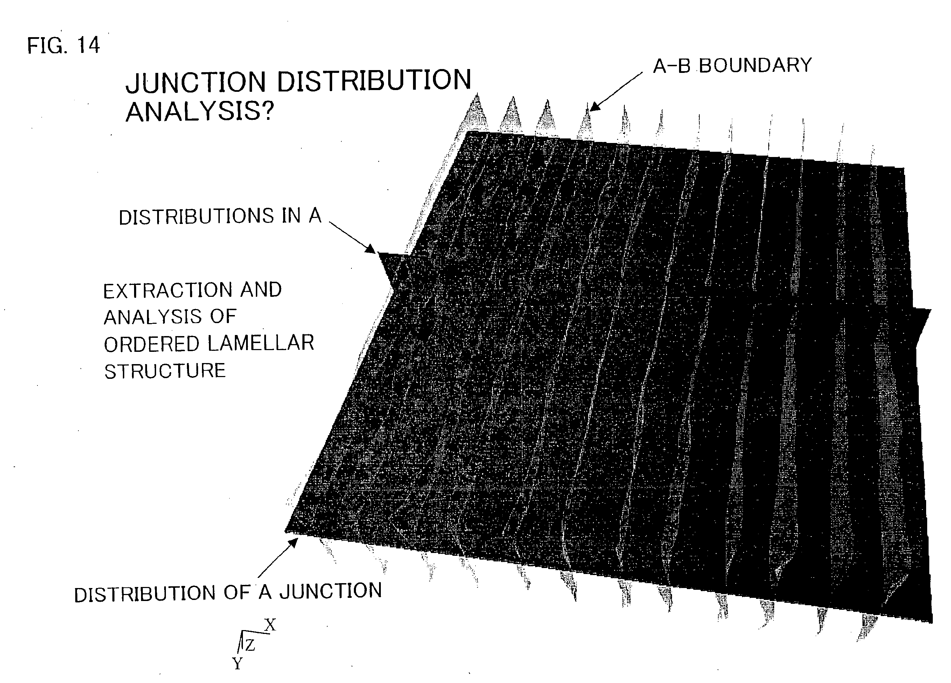

Figure 14 shows a result of junction distribution analysis based on the structure of A-B block polymer. "COGNAC" of "OCTA" was used as a simulation engine. As shown in the figure, the result of analysis showed that an ordered lamellar structure was able to be extracted and analyzed. More specifically, respective distributions in A, A-B boundary, and A junction were shown.

Next, the image was zoomed from mean-field to molecular dynamics method (MD). The following process sequence of (i) to (iii) was performed.

(i) fit the size of system to the mean-field calculation, and determine the number of chains (rough determination of "T" automatically determines density and number of chains)

(ii) run engine

· produce a chain using "density $\Phi$ (r,n)" (Density biased Monte Carlo Method)
· do"Relaxation" to some extent

(iii) repeat the step (ii) plural times, and examine the results.

Note that, the system was set to, 323, A10-B10, beads-spring chain$\times$1250, potential:LJ.

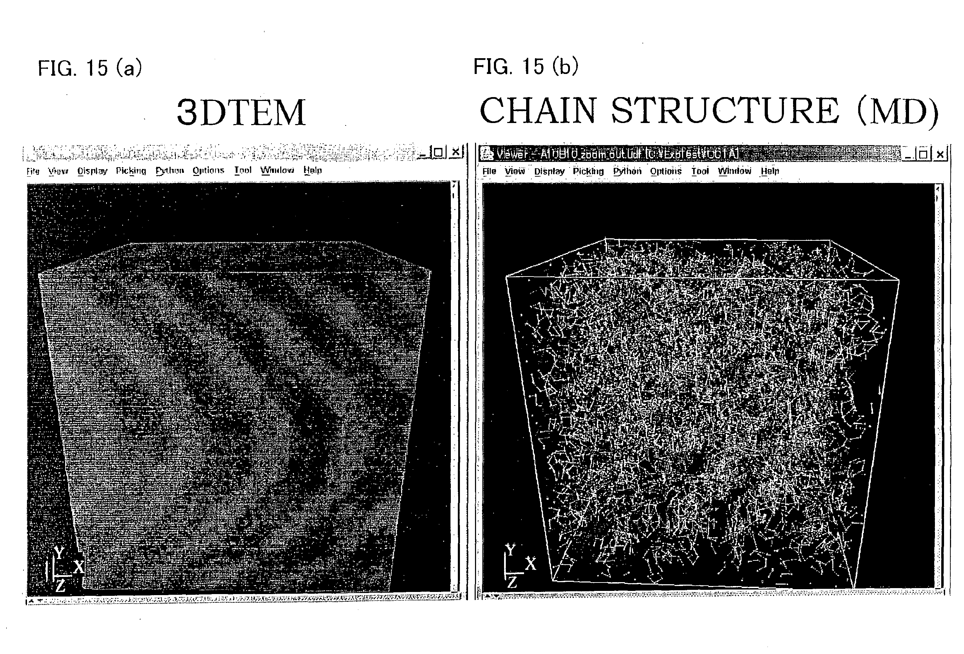

Figure 15 shows the result. Figure 15(a) shows a drawing of an experiment structure of 3DTEM, and Figure 15(b) shows a chain structure obtained by a MD analysis. As shown in the figures, it was found that, compared with a 3DTEM image which only shows the entire concentration distribution of a polymeric component at best, the simulation using the virtual experiment interface of the present invention based on an experiment structure enabled extraction of information regarding distribution condition of a single polymer.

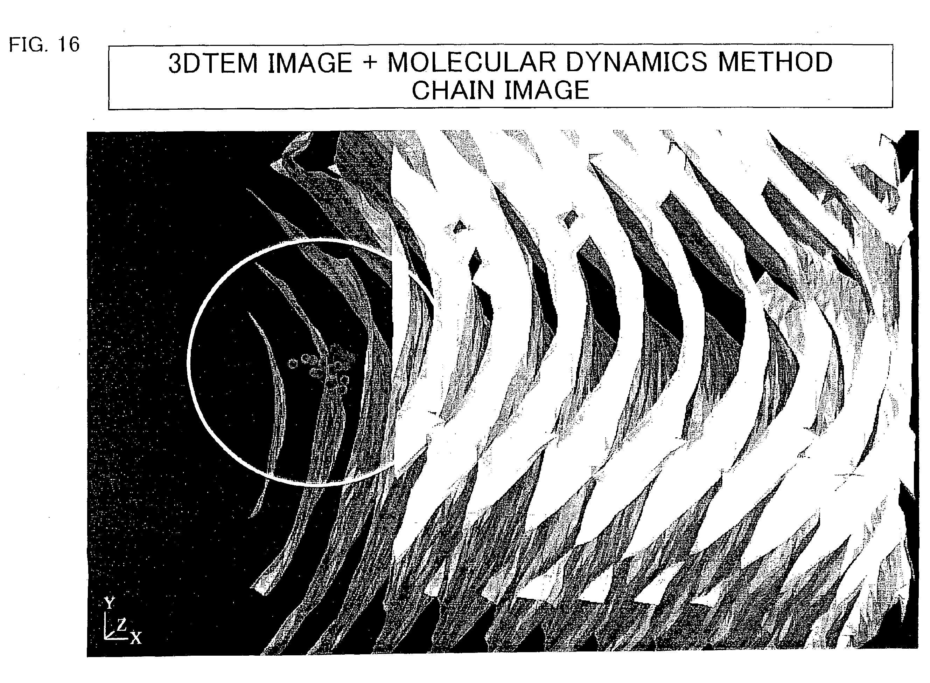

Figure 16 is a drawing showing a combination image of a 3DTEM image and a chain image using a molecular dynamics method, according to the "Example" of the present invention. As shown in the figure, it was found that simulation using the virtual experiment interface of the present invention based on an experiment structure enables extraction of information regarding distribution condition in the terminal of a polymer chain.

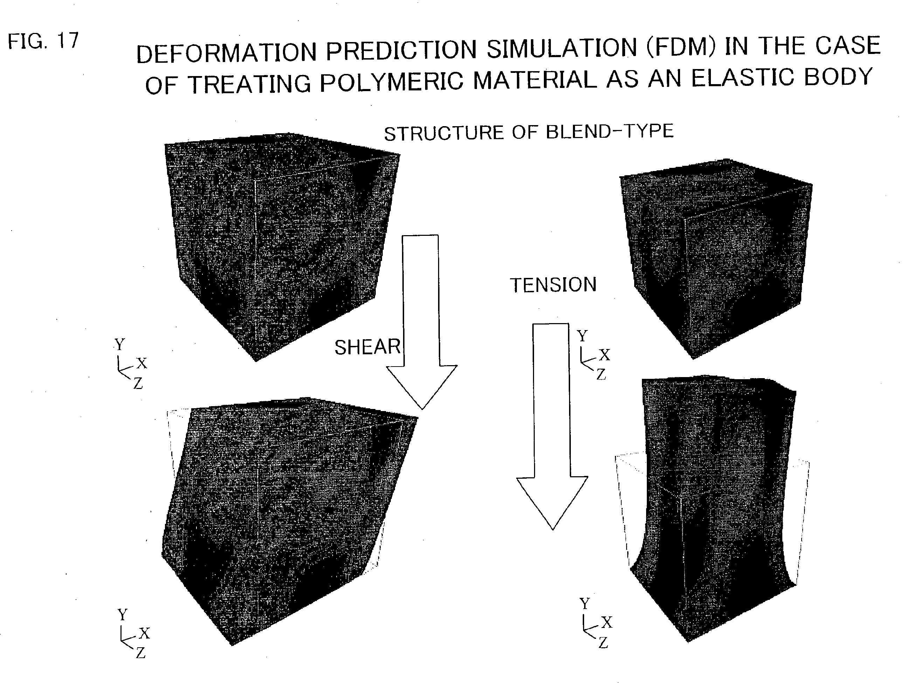

Figure 17 is a drawing showing a result of deformation prediction simulation (FDM) in the case of treating the used polymeric material as an elastic body. "MUFFIN" of "OCTA" was used as a simulation engine. As shown in the figure, it was found that analysis of the structure of Blend type enables prediction of change in internal structure in response to external force (shear, extension) or the like, based on an experiment structure obtained by 3DTEM.

The "Example" of the present invention has shown that the virtual experiment interface according to the present invention enables processing of three-dimensional experiment structure as digital data in a simulation apparatus ("OCTA"). Further, it was also found that, with the three-dimensional experiment structure, it is possible to carry out analysis of terminal distribution in a phase separation structure, or analysis of generation of chain structures, by using a simulator as an experiment analysis tool. It was further found that simulation based on the three-dimensional experiment structure enables prediction of change in internal structure in response to external force or the like.

The embodiments and concrete examples of implementation discussed in the foregoing detailed explanation serve solely to illustrate the technical details of the present invention, which should not be narrowly interpreted within the limits of such embodiments and concrete examples, but rather may be applied in many variations within the spirit of the present invention, provided such variations do not exceed the scope of the patent claims set forth below.

INDUSTRIAL APPLICABILITY

As described, the present invention enables very minute control of a structure of a substance at nanoscale order. The present invention is useful for any nano technology aimed at searching new expression of properties/functions never found before, and making the best use of them. The application range of the present invention, including electronics, biology, photonics, material etc., is large.

**Claims**

1. A virtual experiment interface comprising:

   data acquiring means for acquiring image data of a structure of a polymeric material;
   data conversion means for converting the image data acquired by said data acquiring means into a format compatible with a virtual experiment apparatus, which performs structure analysis of the polymeric material; and
   data output means for outputting data converted into the format by said data conversion means to said virtual experiment apparatus.

2. The virtual experiment interface as set forth in claim 1, wherein the image data is provided by an experiment measurement apparatus.

3. The virtual experiment interface as set forth in claim 1 or 2, wherein said data conversion means carries out operation for converting said image data into a volume fraction value.

4. The virtual experiment interface as set forth in claim 3, wherein the image data is two-dimensional image data, and said data conversion means includes:

   image reading means for reading a pixel value for each pixel of said image data;
   numerical conversion means for converting the pixel value read by said image reading means into a volume fraction value; and
   format conversion means for converting the volume fraction value given by said numerical conversion means into a format compatible with said virtual experiment apparatus.

5. The virtual experiment interface as set forth in claim 4 wherein said data conversion means further including region specification means for specifying a region subjected to image processing among the two-dimensional image data acquired by said data acquiring means, and said image reading means reads a pixel value for each pixel in the region specified by the region specification means.

6. A virtual experiment interface as set forth in claim 3, wherein said image data is three-dimensional image data constituted of plural two-dimensional image data items, and said data conversion means includes:

image reading means for reading a pixel value for each pixel of said image data;

numerical conversion means for converting the pixel value read by said image reading means into a volume fraction value;

format conversion means for converting the volume fraction value given by said numerical conversion means into a format compatible with said virtual experiment apparatus; and

three-dimensional operation means for rearranging the plural two-dimensional data items processed by said format conversion means to create three-dimensional data.

7. The virtual experiment interface as set forth in claim 6, wherein the three dimensional image data is constituted of plural two-dimensional image data layers, and said three-dimensional operation means superimposes the plural two-dimensional data items onto each other to constitute the three-dimensional data.

8. The virtual experiment interface as set forth in claim 6 or 7, wherein:

said data conversion means further including region specification means for specifying a region subjected to image processing among the two-dimensional image data acquired by said data acquiring means, and said image reading means reads a pixel value for each pixel in the region specified by the region specification means.

9. The virtual experiment interface as set forth in any one of claims 4 through 8, wherein the numerical conversion means carries out operation for associating an upper limit value and a lower limit value of an image pixel with an upper limit value and a lower limit value of the volume fraction value set by said virtual experiment apparatus.

10. The virtual experiment interface as set forth in any one of claims 2 through 9 wherein said experiment measurement apparatus is a microscope.

11. The virtual experiment interface as set forth in any one of claims 6 through 8 wherein said experiment measurement apparatus is a three-dimensional transmission electron microscope or a confocal laser scanning microscope.

12. The virtual experiment interface as set forth in any one of claims 1 through 11 wherein the polymeric material is formed of a multiblock copolymer.

13. The virtual experiment interface as set forth in claim 12 wherein said multiblock copolymer forms a network-type micro phase separation.

14. A virtual experiment system comprising:

the virtual experiment interface as set forth in any one of claims 1 through 13;
an experiment measurement apparatus for acquiring image data of a structure of a polymeric material; and
a virtual experiment apparatus for performing structure analysis of a polymeric material.

FIG. 1

FIG. 2

```
  515                    503                    505
┌──────────────┐   ┌──────────────┐   ┌──────────────┐
│              │   │              │   │              │
│   DISPLAY    │   │              │   │              │
│  APPARATUS   │   │     ROM      │   │     RAM      │
│              │   │              │   │              │
└──────┬───────┘   └──────┬───────┘   └──────┬───────┘
       ⇕                  ⇕                  ⇕
┌─────────────────────────────────────────────────────┐
│                        BUS                          │─── 507
└─────────────────────────────────────────────────────┘
       ⇕                  ⇕                  ⇕
                                                    ⬉ 500
┌──────────────┐   ┌──────────────┐   ┌──────────────┐
│              │   │              │   │  AUXILIARY   │
│    INPUT     │   │     CPU      │   │   STORAGE    │
│  APPARATUS   │   │              │   │  APPARATUS   │
│              │   │              │   │              │
└──────────────┘   └──────────────┘   └──────────────┘
      513                501                509
```

FIG. 3

```
           ┌─────────────────┐
           │ DATA ACQUIRING  ├── 201
           │    SECTION      │
           └────────┬────────┘
  ┌─────────────────┼──────────────────────┐
  │                 │                       │
  │        ┌────────┴────────┐              │
  │        │     REGION      │              │
  │        │  SPECIFICATION  ├── 202a  ── 202
  │        │     SECTION     │              │
  │        └────────┬────────┘              │
  │                 │                       │
  │        ┌────────┴────────┐              │
  │        │  IMAGE READING  ├── 202b       │
  │        │     SECTION     │              │
  │        └────────┬────────┘              │
  │                 │                       │
  │        ┌────────┴────────┐              │
  │        │    NUMERICAL    │              │
  │        │   CONVERSION    ├── 202c       │
  │        │     SECTION     │              │
  │        └────────┬────────┘              │
  │                 │                       │
  │        ┌────────┴────────┐              │
  │        │     FORMAT      │              │
  │        │   CONVERSION    ├── 202d       │
  │        │     SECTION     │              │
  │        └────────┬────────┘              │
  └─────────────────┼──────────────────────┘
           ┌────────┴────────┐
           │  DATA OUTPUT    ├── 203
           │    SECTION      │
           └─────────────────┘
```

**FIG. 4**

```
        ┌──────────────┐
        │    START     │
        └──────┬───────┘
               │
               ▼
┌─────────────────────────────────────┐
│ ACQUIRE TWO-DIMENSIONAL IMAGE DATA   │── S1
│ FROM EXPERIMENT MEASUREMENT          │
│ APPARATUS                            │
└──────────────────┬──────────────────┘
                   │
                   ▼
┌─────────────────────────────────────┐
│ SPECIFY A REGION TO BE SUBJECTED TO  │── S2
│ DATA CONVERSION                      │
└──────────────────┬──────────────────┘
                   │
                   ▼
     ┌─────────────────────────────┐
     │ READ A PIXEL VALUE OF EACH   │── S3
     │ PIXEL                        │
     └──────────────┬──────────────┘
                    │
                    ▼
┌─────────────────────────────────────┐
│ CONVERT THE PIXEL VALUES INTO        │── S4
│ VOLUME FRACTION VALUES               │
└──────────────────┬──────────────────┘
                   │
                   ▼
┌─────────────────────────────────────┐
│ CONVERT THE VOLUME FRACTION VALUE    │── S5
│ FOR EACH PIXEL INTO A FORMAT         │
│ COMPATIBLE WITH THE SIMULATION       │
│ APPARATUS                            │
└──────────────────┬──────────────────┘
                   │
                   ▼
┌─────────────────────────────────────┐
│ OUTPUT DATA TO SIMULATION APPARATUS  │── S6
└──────────────────┬──────────────────┘
                   │
                   ▼
        ┌──────────────┐
        │     END      │
        └──────────────┘
```

FIG. 5

THREE-DIMENSIONAL
ANALYSIS
EXPERIMENT
MEASUREMENT
APPARATUS
—101'

—100'

DATA ACQUIRING
SECTION
—201'

—200'

DATA CONVERSION
SECTION
—202'

DATA OUTPUT
SECTION
—203'

SIMULATION APPARATUS
—102'

FIG. 6

DATA ACQUIRING
SECTION ～201'

REGION
SPECIFICATION
SECTION ～202a'

IMAGE READING
SECTION ～202b'

NUMERICAL
CONVERSION
SECTION ～202c'

FORMAT
CONVERSION
SECTION ～202d'

DETERMINING
SECTION ～202e'

THREE-DIMENSIONAL
OPERATION SECTION ～202f'

DATA OUTPUT
SECTION ～203'

FIG. 7

```
                    ┌─────────┐
                    │  START  │
                    └─────────┘
                         │
                         ▼
┌─────────────────────────────────────────────┐
│ ACQUIRE PLURAL TWO-DIMENSIONAL IMAGE DATA    │   S11
│ ITEMS FROM EXPERIMENT MEASUREMENT APPARATUS  │
└─────────────────────────────────────────────┘
                         │
                         ▼
       ┌────────────────────────────────┐
       │ SPECIFY A REGION SUBJECTED TO  │   S12
       │        DATA CONVERSION         │
       └────────────────────────────────┘
                         │
                         ▼
          ┌──────────────────────────┐
          │ READ A PIXEL VALUE FOR   │   S13
          │        EACH PIXEL        │
          └──────────────────────────┘
                         │
                         ▼
        ┌─────────────────────────────────┐
        │ CONVERTS THE PIXEL VALUE INTO A │   S14
        │      VOLUME FRACTION VALUE      │
        └─────────────────────────────────┘
                         │                        S15
                         ▼
┌──────────────────────────────────────────────────────┐
│ CONVERT THE VOLUME FRACTION VALUE FOR EACH PIXEL INTO │
│ A FORMAT COMPATIBLE WITH THE SIMULATION APPARATUS     │
└──────────────────────────────────────────────────────┘
                         │                   S16
                         ▼
              DETERMINES WHETHER OR NOT THE
              CONVERSION PROCESS SEQUENCE          NO
              IS COMPLETED FOR ALL OF THE  ─────────►
              PLURAL TWO-DIMENSIONAL
              IMAGE DATA ITEMS ?
                         │
                        YES
                         ▼
   ┌────────────────────────────────────────────┐
   │ CREATE THREE-DIMENSIONAL DATA BY USING ALL  │   S17
   │ OF THE PLURAL TWO-DIMENSIONAL IMAGE DATA    │
   │ ITEMS                                       │
   └────────────────────────────────────────────┘
                         │
                         ▼
      ┌─────────────────────────────────────┐
      │ OUTPUTS THE THREE-DIMENSIONAL DATA  │   S18
      │      TO THE SIMULATION APPARATUS    │
      └─────────────────────────────────────┘
                         │
                         ▼
                    ┌─────────┐
                    │   END   │
                    └─────────┘
```

FIG. 8

EXPERIMENT DATA

DATA

· 3DTEM IMAGE

· PS–PI block

· 256 × 256 pixel

· 1.8μM sqr.

FEATURE OF DATA

· DEFORMED LAMELLAR STRUCTURE

EP 1 796 034 A1

FIG. 9

## EXPERIMENT DATA AND PROCESSING OF DATA

- DEVELOPMENT OF DIRECT CONVERSION OF IMAGE FILE INTO UDF

- ADDITION OF A STEP OF OUTPUTTING IMAGE FROM THE UDF

EP 1 796 034 A1

FIG. 10

THE RESULTING DISPLAY OF
EXPERIMENT DATA

DISPLAY DATA

· PROCESS 32pixel × 32pixel
× 32pixel AS $32^3$ DATA

( 230nm sqr. )

EP 1 796 034 A1

FIG. 11

**RESULT OF MEAN-FIELD ENGINE**

CONFIRM
ACCORDANCE
WITH PREVIOUS
EXPERIMENT
RESULT

SYSTEM

$32^3$、A10-B10、$\chi_{AB}=0.6$、$\phi_A=0.5$

EP 1 796 034 A1

FIG. 12

ANALYSIS RESULT OF $\Phi(r, n)$

ENTIRE DENSITY DISTRIBUTION OF COMPONENT A

DENSITY DISTRIBUTION IN THE TERMINAL OF THE COMPONENT A

DENSITY DISTRIBUTION IN THE JUNCTION OF THE COMPONENT A

EP 1 796 034 A1

FIG. 13

# APPLICATION TO LAMELLAR STRUCTURE

ANALYSIS SIMULATION OF LAMELLAR STRUCTURE
OBTAINED BY EXPERIMENT

**A-B** block polymer

AFTER ROTATION,
ENLARGEMENT
AND REDUCTION

EP 1 796 034 A1

FIG. 14

JUNCTION DISTRIBUTION ANALYSIS?

A–B BOUNDARY

DISTRIBUTIONS IN A

EXTRACTION AND
ANALYSIS OF
ORDERED LAMELLAR
STRUCTURE

DISTRIBUTION OF A JUNCTION

X
Z
Y

EP 1 796 034 A1

FIG. 15 (a)

FIG. 15 (b)

# 3DTEM

# CHAIN STRUCTURE (MD)

FIG. 16

3DTEM IMAGE + MOLECULAR DYNAMICS METHOD
CHAIN IMAGE

FIG. 17

## DEFORMATION PREDICTION SIMULATION (FDM) IN THE CASE OF TREATING POLYMERIC MATERIAL AS AN ELASTIC BODY

STRUCTURE OF BLEND-TYPE

SHEAR

TENSION

EP 1 796 034 A1

| | INTERNATIONAL SEARCH REPORT | International application No. |
|---|---|---|
| | | PCT/JP2005/015372 |

A. CLASSIFICATION OF SUBJECT MATTER
*G06T1/00* (2006.01), *G06F19/00* (2006.01)

According to International Patent Classification (IPC) or to both national classification and IPC

B. FIELDS SEARCHED

Minimum documentation searched (classification system followed by classification symbols)
*G06T1/00-17/40* (2006.01), *G06F19/00* (2006.01),

Documentation searched other than minimum documentation to the extent that such documents are included in the fields searched
Jitsuyo Shinan Koho          1922-1996     Jitsuyo Shinan Toroku Koho     1996-2005
Kokai Jitsuyo Shinan Koho     1971-2005     Toroku Jitsuyo Shinan Koho     1994-2005

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 09-016244 A  (Sanyo Electric Co., Ltd.), 17 January, 1997 (17.01.97), Full text; all drawings (Family: none) | 1-14 |
| A | JP 2003-256668 A  (Hitoshi GOTO et al.), 12 September, 2003 (12.09.03), Full text; all drawings (Family: none) | 1-14 |
| A | JP 05-089078 A  (Yokogawa Electric Corp.), 09 April, 1993 (09.04.93), Full text; all drawings (Family: none) | 1-14 |

☐ Further documents are listed in the continuation of Box C.  ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 15 November, 2005 (15.11.05) | 29 November, 2005 (29.11.05) |

| Name and mailing address of the ISA/ | Authorized officer |
|---|---|
| Japanese Patent Office | |
| Facsimile No. | Telephone No. |

Form PCT/ISA/210 (second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 9223166 A
- JP 2003105090 A